## Europäisches Patentamt
## European Patent Office
## Office européen des brevets

(19)

(11) Veröffentlichungsnummer: **0 256 010**
B1

(12)           **EUROPÄISCHE PATENTSCHRIFT**

(45) Veröffentlichungstag der Patentschrift :
20.09.89

(51) Int. Cl.⁴: **B 01 D 53/36**, B 01 J 21/18

(21) Anmeldenummer : 86902398.6

(22) Anmeldetag : 02.04.86

(86) Internationale Anmeldenummer :
PCT/EP 86/00205

(87) Internationale Veröffentlichungsnummer :
WO/8605711 (09.10.86 Gazette 86/22)

(54) VERWENDUNG EINES AKTIVKOKSES ZUR STICKOXIDENTFERNUNG AUS ABGASEN.

(30) Priorität : 03.04.85 DE 3512168

(43) Veröffentlichungstag der Anmeldung :
24.02.88 Patentblatt 88/08

(45) Bekanntmachung des Hinweises auf die Patenterteilung : 20.09.89 Patentblatt 89/38

(84) Benannte Vertragsstaaten :
AT DE GB IT NL SE

(56) Entgegenhaltungen :
DE–A– 3 335 499
Chemical Abstracts, Band 82, Nr. 12, März 1975,
Columbus, Ohio (US); siehe Zusammenfassung
76715a

(73) Patentinhaber : Bergwerksverband GmbH
Franz-Fischer-Weg 61
D-4300 Essen 13 (DE)

(72) Erfinder : RICHTER, Ekkehard
Schmachtenbergstrasse 89
D-4300 Essen 18 (DE)
Erfinder : JÜNTGEN, Harald
Bonscheidter Strasse 79
D-4300 Essen (DE)
Erfinder : SCHMIDT, Hans-Jürgen
Heymannplatz 5/6
D-4300 Essen 1 (DE)
Erfinder : KNOBLAUCH, Karl
Semperstrasse 55
D-4300 Essen 1 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Verwendung eines Aktivkokses zur Stickoxidentfernung aus Abgasen.

Es ist aus der DE-A-24 33 076 bekannt, daß Aktivkohlen mit einer spezifischen Oberfläche (nach Brunauer, Emmett und Teller) von 200-2000 $m^2/g$ zur Stickoxid-Reduktion unter Einsatz von Ammoniak im Temperaturbereich von 110 bis 350 °C eingesetzt werden können. Dabei geht der Fachmann davon aus, daß bei dem ablaufenden katalytischen Vorgang Aktivkohlen deshalb geeignet sind, weil sie eine große innere Oberfläche haben. Die große innere Oberfläche wird durch eine Aktivierung erreicht, die durch eine Behandlung der Voraktivate, den Aktivkoksen, z. B. mit Wasserdampf erfolgen kann. Durch das Aktivierungsverfahren sind die Kosten der Aktivkohleherstellung vergleichsweise hoch.

In der DE-A-30 36 531 wird die Verwendung eines Formkokses (Aktivkoks) für die gleichzeitige Entfernung von Schwefeloxiden und Stickoxiden aus Abgasen beschrieben. Die $SO_2$-Abscheidung führt zur Bildung von $H_2SO_4$ im Porensystem des Aktivkokses und damit zu einer Inhibierung der $SO_2$-Beladung, weshalb der Aktivkoks von Zeit zu Zeit thermisch regeneriert werden muß. Bei der thermischen Regeneration zersetzt sich die Schwefelsäure unter Verbrauch von Kohlenstoff des Aktivkokses. Dies bewirkt eine Erweiterung des Porensystems und eine Vergrößerung der inneren Oberfläche, so daß aus dem Aktivkoks eine Aktivkohle entsteht.

Der Erfindung liegt die Aufgabe zugrunde, Mittel, die die Stickoxid-Reduktion mit Ammoniak katalysieren, zu verwenden, die eine höhere Selektivität als Aktivkohlen aufweisen und die außerdem kostengünstiger als Aktivkohlen hergestellt werden können.

Es hat sich in Versuchen überraschend herausgestellt, daß als ein solches Mittel Aktivkokse geeignet sind, die durch Mahlen von Steinkohle mit anschließender Oxidation, Formung mit Bindemitteln wie Pech, Bitumen, Teer, Teeröl zu Formlingen von 3-9 mm und Schwelung mit einer Aufheizgeschwindigkeit von 20-100 °C/min. auf Temperaturen von 700 bis 900 °C bei Anwesenheit von 2-5 Vol.-% Sauerstoff hergestellt werden. Diese Aktivkokse haben einen Gehalt an Flüchtigen Bestandteilen von 2-8 % und eine Oberfläche von 20-150 $m^2/g$. Gegenstand der Erfindung ist dem gemäß die Verwendung eines Aktivkokses zur Reduktion von Stickstoffoxiden mit Ammoniak aus Abgasen unter Einsatz von Ammoniak als Reduktionsmittel im Temperaturbereich von 90 bis 150 °C, der aus gemahlener und oxidierter Steinkohle, die mit Bindemitteln vermischt wurde, geformt und mit einer Aufheizgeschwindigkeit von 20-100 °C/min. auf Temperaturen von 700-900 °C bei Anwesenheit von 2-5 Vol.-% Sauerstoff geschwelt worden ist, so daß sich für den Aktivkoks 2-8 % Flüchtige Bestandteile und eine Oberfläche von 20-150 $m^2/g$ ergeben.

Als Bindemittel lassen sich beispielweise Pech, Bitumen, Teer oder Teeröl verwenden.

Solche Aktivkokse lassen die Reduktion der Stickoxide mit Ammoniak im Temperaturbereich von 90 bis 150 °C wesentlich selektiver als Aktivkohlen ablaufen. Ein Indiz dafür ist der festgestellte geringere $NH_3$-Verbrauch bei Einsatz von Aktivkoksen. Da bei Aktivkoksen als Vorstufe der Aktivkohleherstellung der Verfahrensschritt des Aktivierens eingespart wird, sind Aktivkokse außerdem billiger als Aktivkohlen.

Werden die Aktivkokse gemäß einer Weiterbildung der Erfindung mit Natrium- oder Kaliumsalzen imprägniert, so erhöht sich die katalytische Aktivität der Adsorptionsmittel noch.

Die Imprägnierung kann nach an sich bekannten Verfahren erfolgen, z. B. durch Tränkung mit einer wäßrigen Lösung und anschließender Trocknung.

Die Vorteile der Verwendung von Aktivkoks gegenüber Aktivkohlen zur Stickoxidreduktion werden nachfolgen anhand der Beispiele näher beschrieben.


Beispiel 1


Ein Reaktor mit einem Durchmesser von 50 mm wird mit einem Aktivkoks entsprechend einer Schütthöhe von 100 cm gefüllt. Bei dem Aktivkoks handelt es sich um ein Produkt, bei dem backende Fettkohle mit 20,5 % Flüchtigen Bestandteilen mit 23 Gewichtsteilen Pech vermischt, in einer Strangpresse zu 5 mm Formlingen extrudiert und anschließend geschwelt wurden.

Der Reaktor wird von einem Gasstrom von 1,5 $m^3/h$ (i. N.) mit einer Gaszusammensetzung von 6,4 Vol.-% $O_2$, 9,8 Vol.-% $H_2O$, Rest $N_2$ bei Temperaturen von 90, 120 und 150 °C durchströmt. Die NO- bzw. $NH_3$-Konzentrationen ($C_{NO}$, $C_{NH_3}$) sowie die Versuchsergebnisse sind in Tabelle 1 aufgeführt. Bei diesem Versuch liegt der Umsatz an NO ($U_{NO}$) je nach Versuchstemperatur zwischen 53 und 65 %. Für den spezifischen $NH_3$-Verbrauch ergeben sich Werte von 0,65-0,70 Mol $NH_3$ pro umgesetztes Mol NO.


(Siehe Tabelle 1 Seite 3 f.)

Tabelle 1

Aktivkoks

| | | | | |
|---|---|---|---|---|
| T | ($^{o}$C) | 90 | 120 | 150 |
| $c_{NO, ein}$ | (vpm) | 488 | 720 | 460 |
| $c_{NO, aus}$ | (vpm) | 229 | 290 | 161 |
| $c_{NH_3, ein}$ | (vpm) | 488 | 790 | 400 |
| $c_{NH_3, aus}$ | (vpm) | 314 | 490 | 206 |
| $U_{NO}$ | ( % ) | 53 | 60 | 65 |
| $\dfrac{Mol\ NH_3}{Mol\ NO}$ | $\dfrac{mol}{mol}$ | 0,67 | 0,70 | 0,65 |

Beispiel 2

In den im Beispiel 1 beschriebenen Reaktor werden bei gleichen Versuchsbedingungen Aktivkokse eingesetzt, die mit Natrium- bzw. Kaliumsulfat imprägniert und bei 700 °C im Inertgasstrom calciniert worden sind. Die Ergebnisse sind in Tabelle 2 genannt. Durch die Imprägnierung erhöht sich die katalytische Aktivität des Aktivkokses, so daß sich gegenüber Beispiel 1 ein um 3-8 % höherer Umsatz an NO erzielen läßt.

Tabelle 2

Aktivkoks mit Imprägnierung

| | | | |
|---|---|---|---|
| Imprägnierung: | | 0,56 Gew.-% Na | 0,73 Gew.-% K |
| T | ($^{o}$C) | 120 | 120 |
| $c_{NO, ein}$ | (vpm) | 488 | 488 |
| $c_{NO, aus}$ | (vpm) | 180 | 153 |
| $c_{NH_3, ein}$ | (vpm) | 488 | 488 |
| $c_{NH_3, aus}$ | (vpm) | 288 | 262 |
| $U_{NO}$ | ( % ) | 63 | 68 |
| $\dfrac{Mol\ NH_3}{Mol\ NO}$ | $\dfrac{mol}{mol}$ | 0,65 | 0,68 |

Vergleichsbeispiel

Ein Vergleichsversuch unter Einsatz einer Aktivkohle mit einer inneren Oberfläche (BET, DIN 66131) von 850 m²/g ergibt die in Tabelle 3 aufgeführten Werte. Es werden nur Umsätze an NO zwischen 28 und 35 % erreicht. Der spezifische NH₃-Verbrauch liegt zwischen 1,23 und 1,27 Mol NH₃ pro umgesetztes Mol NO.

EP 0 256 010 B1

Tabelle 3

Aktivkohle

| T | $(^{o}C)$ | 90 | 120 | 150 |
|---|---|---|---|---|
| $c_{NO,\ ein}$ | (vpm) | 488 | 720 | 460 |
| $c_{NO,\ aus}$ | (vpm) | 351 | 500 | 299 |
| $c_{NH_3,\ ein}$ | (vpm) | 488 | 790 | 400 |
| $c_{NH_3,\ aus}$ | (vpm) | 317 | 510 | 202 |
| $U_{NO}$ | ( % ) | 28 | 31 | 35 |
| $\dfrac{Mol\ NH_3}{Mol\ NO}$ | $\dfrac{mol}{mol}$ | 1,25 | 1,27 | 1,23 |

Die Beispiele belegen, daß bei Verwendung von Aktivkoks für die Reduktion von Stickoxiden mit Ammoniak die Umsetzung selektiver abläuft. Der spezifische $NH_3$-Verbrauch liegt bei Werten von 0,65-0,70 Mol $NH_3$ pro umgesetztes Mol NO und damit um etwa die Hälfte niedriger als bei Einsatz von Aktivkohle (1,23-1,27 Mol $NH_3$ pro umgesetztes Mol NO).

**Patentansprüche**

1. Verwendung eines Aktivkokses zur Reduktion von Stickstoffoxiden mit Ammoniak aus Abgasen unter Einsatz von Ammoniak als Reduktionsmittel im Temperaturbereich von 90 bis 150 °C, der aus gemahlener und oxidierter Steinkohle, die mit Bindemitteln vermischt wurde, geformt und mit einer Aufheizgeschwindigkeit von 20-100 °C/min. auf Temperaturen von 700-900 °C bei Anwesenheit von 2-5 Vol.-% Sauerstoff geschwelt worden ist, so daß sich für den Aktivkoks 2-8 % Flüchtige Bestandteile und eine Oberfläche von 20-150 m²/g ergeben.

2. Verwendung eines Aktivkokses nach Anspruch 1, dadurch gekennzeichnet, daß der Aktivkoks mit Natrium- und/oder Kaliumsalzen imprägniert worden ist.

**Claims**

1. The use of an active coke for the reduction of nitrogen oxides with ammonia from waste gases with the introduction of ammonia as a reducing agent in the temperature range of 90 to 150 °C, which has been moulded from ground and oxidized coal, has been mixed with binders, and has been carbonized at a heating rate of 20 to 100 °C/min. to temperatures of 700 to 900 °C in the presence of 2 to 5 % by volume of oxygen, so that 2 to 8 % of volatile components and a surface area of 20 to 150 m²/g are produced for the active coke.

2. The use of an active coke according to Claim 1, characterized in that the active coke is impregnated with sodium salts and/or potassium salts.

**Revendications**

1. Utilisation d'un coke actif pour la réduction à l'ammoniaque des oxydes d'azote contenus dans les gaz d'échappement en utilisant l'ammoniaque en qualité de moyen de réduction dans la plage des températures de 90 à 150 °C, le coke actif constitué de houille broyée et oxydée, mélangée avec des liants et ayant subi une carbonisation à basse température avec un taux d'échauffement de 20 à 100 °C/min à des températures de 700 à 900 °C en présence de 2 à 5 % en vol. de $O_2$ de façon que le coke actif contienne 2 à 8 % de matière volatile et ait une surface de 20 à 150 m²/g.

2. Utilisation d'un coke actif selon la revendication 1, caractérisée par le coke actif imprégné de sels de sodium et/ou de sels de potassium.

4